# EUROPÄISCHE PATENTSCHRIFT

(11) **EP 2 509 747 B1**
(45) Veröffentlichungstag und Bekanntmachung des Hinweises auf die Patenterteilung: **26.06.2013**
(21) Anmeldenummer: 10774161.3
(22) Anmeldetag: 18.10.2010
(51) Int. Cl.: B24B 19/16, B24B 41/06, B23K 11/30

(54) **ELEKTRODENSCHLEIFVORRICHTUNG**
ELECTRODE GRINDING DEVICE
DISPOSITIF DE MEULAGE D'ÉLECTRODES

(30) Priorität: 10.12.2009 DE 102009057490
(43) Veröffentlichungstag der Anmeldung: 17.10.2012
(73) Patentinhaber: Tamm, Rolf, 88682 Salem (DE)
(72) Erfinder: Tamm, Rolf, 88682 Salem (DE)
(74) Vertreter: Weisse, Renate
(86) Internationale Anmeldenummer: PCT/EP2010/065620
(87) Internationale Veröffentlichungsnummer: WO 2011/069727

(56) Entgegenhaltungen:
- DE-A1-102006 052 904
- JP-A- 7 276 211
- US-B1- 6 672 942

## Beschreibung

### Technisches Gebiet

Die Erfindung betrifft eine Vorrichtung zur Bearbeitung von Schweißelektroden mit einer von einem Antriebsmotor über eine Welle angetriebenen Schleifscheibe, welche in einem Hohlraum in einem Gehäuse umläuft, wobei in dem Gehäuse eine Vielzahl von Durchbrüchen zur Führung von zu bearbeitenden Schweißelektroden in definierter Lage zu der Schleifscheibe in einer Vielzahl von Anschleifwinkeln vorgesehen sind.

Schweißelektroden bestehen aus einem sehr harten und gegen hohe Temperaturen beständigen Material wie Wolfram. Es gibt Schweißelektroden von unterschiedlichem Querschnitt. Die Schweißelektroden laufen in einer Spitze oder in einer Schneide aus. Diese Form der Schweißelektroden hängt von der jeweiligen Anwendung ab. Die Spitzen der Schweißelektroden verschleißen im Betrieb.

Schweißelektroden können ohne Anschliff oder mit einer vorgefertigten Spitze gekauft werden. Nach dem Gebrauch ist die Spitze oder der Anschliff verschlissen. Die Schweißelektroden werden dann nachgeschliffen oder verworfen. Das ist wegen des hochwertigen Materials sehr teuer.

### Stand der Technik

Es ist bekannt, Schweißelektroden an- oder nachzuschleifen. Das geschieht üblicherweise von Hand auf offenen Schleif- oder Trennscheiben. Dieses Verfahren ist ungenau und gefährlich. Weiterhin sind Vorrichtungen mit einer offenen Schleifscheibe bekannt, bei denen die Schweißelektroden durch eine Führungshülse unter einem bestimmten Winkel gegen die Schleifscheibe geführt werden. Auch solche Vorrichtungen sind aufwendig. Es ist insbesondere aufwendig, die Vorrichtung zur Anpassung an verschiedene Typen von Schweißelektroden oder an verschiedene Spitzen- oder Schneidenformen umzurüsten. Dabei ist insbesondere ein Austausch der Führungshülsen erforderlich.

Eine Vorrichtung, mit welcher Elektroden mit einer Vielzahl (z.B. 6) von unterschiedlichen Elektrodendurchmessern mit einer Vielzahl von unterschiedlichen Spitzenwinkeln (z.B. 4) und mit einer Vielzahl von Längen hergestellt werden können, ist ein wertvolles, kostensparendes Hilfsmittel.

Aus der DE 100 10 520 A1 ist eine Vorrichtung zur Bearbeitung von Schweißelektroden mit einer Schleifscheibe bekannt. Die Schleifscheibe läuft in einem Schleifscheibengehäuse um. Die Vorrichtung weist weiterhin einen Gehäuseaufsatz auf, welcher an dem Schleifscheibengehäuse befestigbar ist und wenigstens einen Durchbruch zur Führung einer zu bearbeitenden Schweißelektrode in definierter Lage zu der Schleifscheibe aufweist. Dabei fällt die Ebene der Schleifscheibe im wesentlichen mit der Trennebene zwischen dem Schleifscheibengehäuse und dem Aufsatz zusammen. Der Aufsatz kann eine Mehrzahl von gegeneinander versetzten, unterschiedlichen Durchbrüchen zur Aufnahme unterschiedlicher Typen von Schweißelektroden aufweisen. Der Aufsatz kann aber auch eine Mehrzahl von gegeneinander versetzten Durchbrüchen aufweisen, deren Achsen die Ebene der Schleifscheibe unter unterschiedlichen Winkeln schneiden. In dem Schleifscheibengehäuse kann ein sich über die Stirnfläche des Gehäuses erstreckender radialer Schlitz gebildet sein, durch welchen hindurch eine Schweißelektrode zum Durchtrennen an die Mantelfläche der Schleifscheibe anlegbar ist. Bei der offenbarten Vorrichtung ist die Schleifscheibe an einer Schleifscheibenaufnahme befestigt, die ihrerseits mit der Motorwelle des Antriebsmotors verbunden ist. Die gesamte Vorrichtung bildet eine tragbare Einheit.

Aus der DE 102 43 210 B3 ist eine Anordnung bekannt, bei der zwei parallele Schleifscheiben unterschiedlicher Körnung eingesetzt werden. Eine erste Schleifscheibe läuft in einem Hohlraum zwischen dem Motoraufsatz und einem ersten Gehäuseaufsatz um. Die zweite Schleifscheibe läuft in einem zweiten Hohlraum zwischen dem ersten Gehäuseaufsatz und dem zweiten Gehäuseaufsatz um. Die Gehäuseaufsätze sind mit Durchbrüchen zur Führung der Schweißelektroden versehen. Die bekannte Anordnung erlaubt den Einsatz unterschiedlicher Schleifscheiben mit Standardmaßen ohne Umbau.

Die Anordnung verwendet neben einem Motor mit einem Motorgehäuse weitere Gehäuseteile: einen Motorflansch, der direkt am Motorgehäuse angeschraubt wird und wenigstens einen Gehäuseteil, in dem die Durchbrüche zur Führung der Elektroden vorgesehen sind. Die Durchbrüche erstrecken sich jeweils von der dem Motor abgewandten Seite im Gehäuseteil in Richtung auf die Schleifscheibe, die zwischen dem Motorflansch und dem Gehäuseteil umläuft. Je nach Anzahl der Schleifscheiben werden weitere Gehäuseteile aufgesetzt. Auch hier beginnen die Durchbrüche auf der dem Motor abgewanden Seite. Mit anderen Worten: Die Elektroden werden immer auf den Motor zu in die Durchbrüche eingeführt. Die Anordnung ist je nach Anzahl der Gehäuseteile vergleichsweise lang und benötigt eine lange Antriebswelle. Zur Befestigung der Gehäuseteile sind mehrere weitere Befestigungsbauteile, wie Schrauben, Muttern, Stifte etc. erforderlich.

DE 10 2006 052904 A1 offenbart eine Anordnung, bei welcher zwei Schleifscheiben oder Abriebflächen unterschiedlicher Körnung praktisch in einer Ebene in einem gemeinsamen Hohlraum umlaufen. Die Abriebflächen sind bei dieser bekannten Anordnung voneinander abgewandt. Zwischen den Schleifscheiben ist eine dritte Scheibe größeren Durchmessers angeordnet. An dieser Scheibe können Elektroden geschnitten werden. Die Anordnung arbeitet entweder mit einer Schleifscheibe mit zwei Abriebflächen unterschiedlicher Körnung oder mit einer Schleifscheibenanordnung aus wenigstens zwei Schleifscheiben. Die Bohrungen, in denen die Elektroden geführt werden, werden mit hoher Präzision bezüglich des Winkels gefertigt.

Alle bekannten Anordnungen weisen für jeden Anschleifwinkel mehrere Durchbrüche ausgewählter Durchmesser für unterschiedlich dicke Elektroden auf. Die Vielzahl von Bohrungen, beispielsweise 36 Bohrungen mit hoher Fertigungsgenauigkeit, erfordern viel Zeit bei der Herstellung. Die Verrichtungen sind daher teuer.

US 6 672 942 B1 offenbart eine Anordnung mit Spannfuttern. Eine Anzahl von Spannfuttern weist dabei unterschiedliche Durchmesserbereiche auf.

JP 7 276211A offenbart eine Elektrodenschleifmaschine mit einem Gehäuse und einem Motor, der eine Schleifscheibe antreibt. Ein gemeinsamer Führungseinsatz ist für mehrere parallele Bohrungen mit unterschiedlichen Durchmessern vorgesehen.

### Offenbarung der Erfindung

Es ist Aufgabe der Erfindung, eine Schleifvorrichtung für Elektroden der eingangs genannten Art zu schaffen, welche kostengünstiger herstellbar ist.

Erfindungsgemäß wird die Aufgabe dadurch gelöst, dass
(a) für jeden gewünschten Anschleifwinkel nur ein Durchbruch vorgesehen ist;
(b) alle Durchbrüche einen einheitlichen Innendurchmesser haben, und
(c) eine Vielzahl von Führungseinsätzen vorgesehen ist, wobei für jeden Elektrodendurchmesser der zu bearbeitenden Schweißelektroden ein Führungseinsatz vorgesehen ist, welcher zumindest teilweise in den Durchbruch passgenau einführbar ist und dessen Innendurchmesser derart an den Elektrodendurchmesser angepasst ist, dass die Schweißelektrode in dem Führungseinsatz führbar ist.

Die Erfindung basiert auf der Erkenntnis, dass es ausreichend ist, für jeden Anschleifwinkel nur eine Bohrung vorzusehen und diese Bohrung mit einem passenden Führungseinsatz zu versehen. Dabei braucht für jeden Elektrodendurchmesser nur jeweils ein Führungseinsatz vorgesehen werden. Die Anzahl der Führungseinsätze ist also wesentlich geringer als die Anzahl der Variationen für Anschleifwinkel und Elektrodendurchmesser. Eine Anordnung mit beispielsweise 6 Bohrungen für 6 Anschleifwinkel und 6 Führungseinsätzen für 6 unterschiedliche Elektrodendurchmesser kann dann 36 Bohrungen ersetzen, wie sie beim Stand der Technik erforderlich waren.

Wenn ein Anwender von den sich ergebenden Möglichkeiten nur einen oder weniger Elektrodendurchmesser benötigt, reichen sogar noch weniger Führungseinsätze. Dadurch werden die Kosten weiter gemindert.

Die Elektrode wird in dem Führungseinsatz geführt, dessen Innendurchmesser gerade so an den Außendurchmesser der Elektrode angepasst ist, dass diese gut darin drehbar ist. Der Führungseinsatz wird zumindest teilweise in die Bohrung gesteckt. Dadurch wird der Anschleifwinkel festgelegt.

Vorzugsweise weist der Führungseinsatz einen ersten Einsatzteil mit einem Außendurchmesser aufweist, der größer ist, als der Innendurchmesser der Durchbrüche und einen zweiten Einsatzteil mit einem Außendurchmesser, der passgenau in den Durchbruch einführbar ist. Dann ragt der erste Einsatzteil aus der Bohrung heraus und kann gut gegriffen werden.

In einer weiteren Ausgestaltung der Erfindung ist der Führungseinsatz mit einem rohrförmigen Halter zur Aufnahme einer vollständigen Elektrode verbindbar. Gerade dünne Elektroden können leicht brechen. Zum Schutz dieser Elektroden gegen Bruch oder Beschädigung kann ein rohrförmiger Halter vorgesehen sein, in den die Elektrode eingeführt wird. Der Halter kann mit dem Führungseinsatz verbunden werden. Das erleichtert die Handhabung der Elektrode auch während des Schleifvorgangs. Der Halter auch fest in den Führungseinsatz integriert sein.

Bei einigen Anwendungen kann es sinnvoll sein, den Halter in einen ersten Einsatz und den ersten Einsatz in einen zweiten Einsatz zu stecken. Die ganze Kombination wird dann in die Bohrung eingeführt. Entsprechend sind die Außendurchmesser und die Innendurchmesser aneinander angepasst.

Es gibt Kurzelektroden, welche zu kurz sind um durch die Bohrung bis zur Schleifscheibe zu reichen. Für derartige Kurzelektroden ist es vorteilhaft, wenn der Führungseinsatz langgestreckt ist und eine Halterung für Kurzelektroden umfasst ist, welche im Inneren des Führungseinsatzes gehalten ist. Die Kurzelektrode kann dann mit dem Führungseinsatz bis zur Schleifscheibe durchgesteckt werden, wenn der Führungseinsatz ausreichend langgestreckt ist.

In einer Ausgestaltung der Erfindung ist die Halterung für Kurzelektroden von einer Spannzange gebildet. Die Kurzelektrode kann auf einfache Weise in der Spannzange gehalten werden. Die Spannzange wird dann in den Führungseinsatz gesteckt oder geschraubt.

In einer besonders einfachen Ausgestaltung der Erfindung weist die Spannzange ein Innengewinde auf, in welches ein Gewindestift mit einem Anschlag bis zu einer ausgewählten Tiefe einschraubbar ist, und der Führungseinsatz weist eine Schulter auf, auf welcher der Anschlag aufliegt. Die Spannzange mit der Kurzelektrode und dem Gewindestift wird dann von hinten in den Führungseinsatz eingesteckt, bis der Anschlag auf der Schulter aufliegt. Der Gewindestift kann so eingestellt werden, dass die Kurzelektrode in gewünschtem Maß vorsteht, so dass sie leicht zu schleifen ist.

In einer alternativen Ausgestaltung der Erfindung erfolgt die Halterung der Kurzelektroden mittels einer Schrumpfpassung, die mittels Wärme erzeugt wird.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig. 1: ist eine Explosionsdarstellung einer Vorrichtung zum Schleifen von Elektroden.

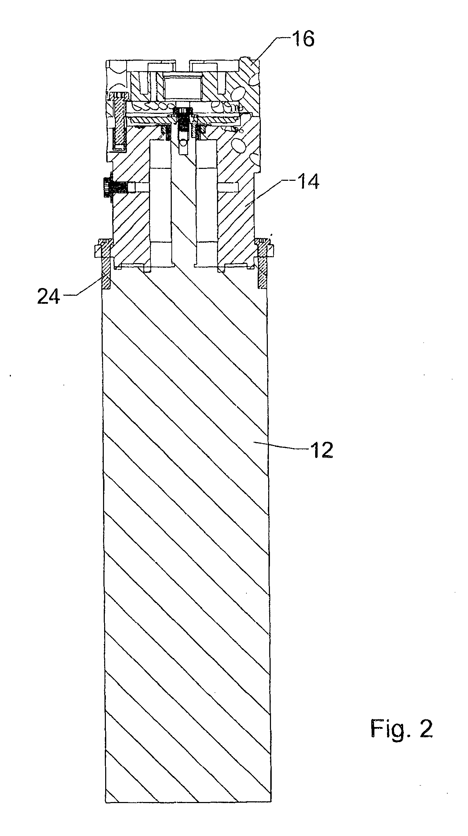

- Fig.2: ist ein Querschnitt durch eine Vorrichtung zum Schleifen von Elektroden.
- Fig.3: ist ein Schnitt durch den Kopf der Vorrichtung aus Fig. 1 im Detail.
- Fig.4a-d: zeigt einen Führungseinsatz entsprechend einem ersten Ausführungsbeispiel in verschiedenen Darstellungen.
- Fig.5a-d: zeigt einen Führungseinsatz entsprechend einem zweiten Ausführungsbeispiel in verschiedenen Darstellungen.
- Fig.6a-e: zeigen zwei Gehäuseteile, welche gegeneinander um eine außermittige Achse verstellbar sind in verschiedenen Darstellungen.
- Fig.7: ist ein Querschnitt durch einen Führungseinsatz mit einer Halterung für Kurzelektroden.
- Fig.8: zeigt den Führungseinsatz aus Figur 7 während des Schleifens.

### Beschreibung des Ausführungsbeispiels

In den Figuren bezeichnet 10 allgemein eine Vorrichtung zum Schleifen von Schweißelektroden aus Wolfram. Die Vorrichtung 10 umfasst einen Motor mit einem Motorgehäuse 12, einen an dem Motorgehäuse 12 angeschraubten Motorflansch 14 und ein auf dem Motorflansch 14 aufgesetztes zylindrisches Gehäuseteil 16. Das Gehäuseteil 16 wird auf nachstehend beschriebene Weise mit dem Motor und dem Motorflansch verbunden. Im Bereich zwischen dem Motorflansch 14 und dem Gehäuseteil 16 läuft eine Schleifscheibenanordnung 18 mit einer Schleifscheibe 20 um. Es kann auch eine Schleifscheibenanordnung mit zwei Schleifscheiben verwendet werden.

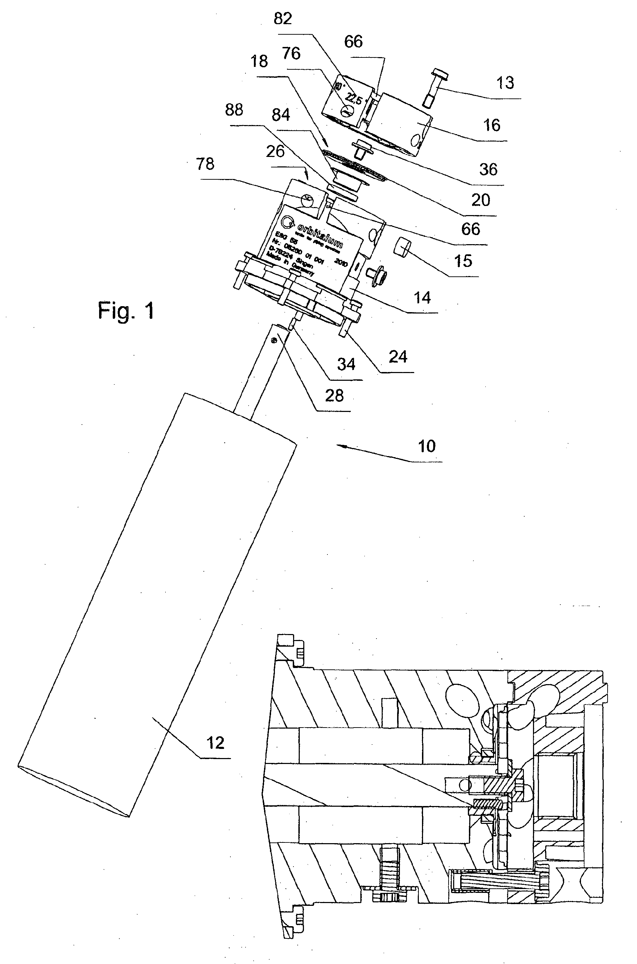

Der Flansch ist mit Bohrungen versehen. Über diese Bohrungen wird der Motorflansch 14 am Motorgehäuse 12 auf die in Fig.1 dargestellte Weise mit Schrauben 24 verschraubt. Das Gehäuseteil 16 wird mit einer Schraube 13 und einer Mutter 15 fest mit dem Motorflansch 14 verbunden. Hierzu weist das Gehäuseteil 16 eine Durchgangsbohrung und der Motorflansch eine Aufnahme für die Mutter 15 auf.

An dem dem Motor abgewandten Ende 26 des Motorflansches 14 ist eine scheibenförmige Vertiefung vorgesehen. Diese Vertiefung dient der Aufnahme der Schleifscheibe 20. Die Welle 30, mit welcher die Schleifscheibenanordnung 18 mit dem Motor verschraubt wird, ist gleichzeitig die Motorwelle.

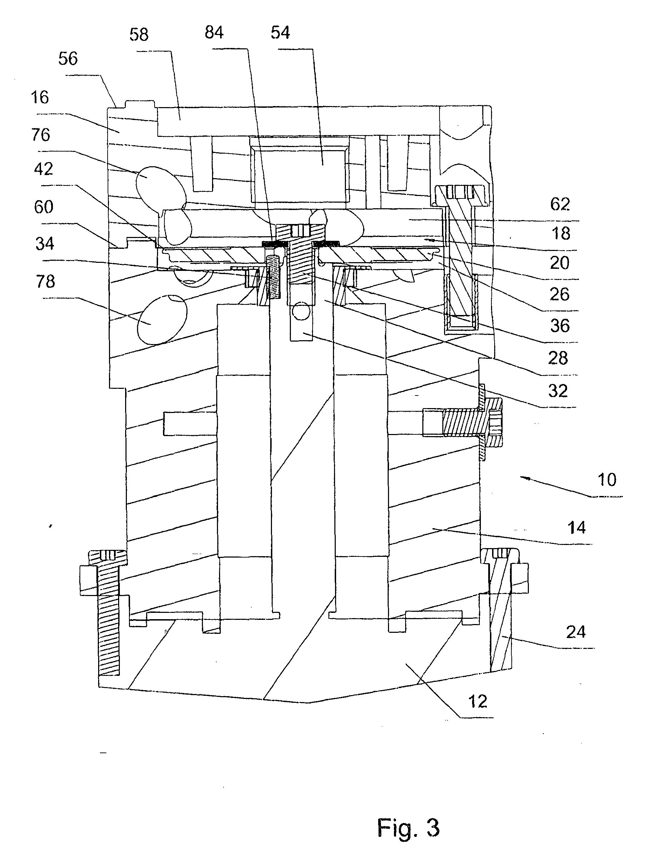

Die Welle 30 weist einen vorderen Teil 28 auf. Weiterhin weist die Welle 30 mit vorderem Teil 28 eine Bohrung 32 mit einem Innengewinde auf. Diese ist in Figur 3 erkennbar. Außerdem ist ein außeraxialer Stift 34 an dem vorderen Teil 28 befestigt. Die Schleifscheibe 20 der Schleifscheibenanordnung 18 ist mit einer zentralen Bohrung und einer damit verbundenen, außeraxialen Bohrung versehen. Die Schleifscheibe 20 wird so auf die Welle 30 aufgesetzt und mit einer Schraube 36 verschraubt, dass die zentrale Bohrung mit der axialen Bohrung 32 in der Welle 30 fluchtet und der Stift 34 durch die außeraxiale Bohrung in der Schleifscheibe 20 ragt. Die Rotation erfolgt um die Achse der zentralen Bohrungen, wobei der Stift 34 in die außeraxiale Bohrung eingreift und die Antriebskraft auf die Schleifscheibenanordnung 18 überträgt.

In diesem Ausführungsbeispiel umfasst die Schleifscheibenanordnung 18 eine grobkörnige Schleifscheibe 20. Die Schleifscheibe 20 weist einen besonders feinen Rand 42 auf. Dieser Rand 42 dient zum Schneiden der Elektroden mit verbessertem Schneidverhalten. Der Rand ist so an die Schleifscheibe 20 angeformt, dass er mit einer Seite in der Schleifebene liegt. Auf diese Weise ist eine der Schleifflächen, nämlich die obere Schleiffläche auf der Seite des Randes 42 größer, als die gegenüberliegende Schleiffläche.

Wenn die Schleifscheibenanordnung 18 mit der Welle 30 eingesetzt ist, wird das im wesentlichen zylindrische Gehäuseteil 16 koaxial auf den Motorflansch 14 aufgesetzt.

Das Gehäuseteil 16 ist mit einer Mittenbohrung 54 versehen. Diese ist in Figur 3 zu erkennen. Die Mittenbohrung 54 fluchtet mit den Bohrungen der Schleifscheibenanordung 18 und der Rotationsachse der Welle 30. Um die Bohrung 54 herum ist an der dem Motor zugewandten Planseite 60 eine scheibenföimige Vertiefung 62 vorgesehen. Auf der dem Motor abgewandten Planseite 56 des Gehäuseteils 16 ist eine Vertiefung 58 vorgesehen Diese Vertiefungen 58 und 62 haben in etwa die gleichen Dimensionen wie die Vertiefung auf der Planseite 26 im Motorflansch 14. Die Vertiefungen in der Planseite 26 und die Vertiefung 62 bilden bei zusammengesetzter Anordnung zusammen einen Hohlraum. Der Hohlraum dient der Aufnahme der Schleifscheibenanordnung 18.

Das Gehäuse 16 und der Motorflansch 14 weisen ferner einen Längsschlitz 66 in radialer Richtung auf, welcher sich über die gesamte Dicke der Anordnung erstreckt. Der Längsschlitz 66 ist in Figur 1 zu erkenen. Die Schlitze 66 in Motorflansch 14 und Gehäuse 16 liegen übereinander. Der so gebildete Schlitz 66 ist breit genug, dass die Elektroden dort eingeführt werden können. Bei rotierender Schleifscheibenanordnung 18 kann die Elektrode an dem Rand 42 einer der Schleifscheiben gekürzt werden, indem das verbrauchte Elektrodenende oder die neu angeschliffene Elektrodenseite abgeschnitten wird.

Das Gehäuse 16 und der Motorflansch 14 weisen von Durchbrüche in Form von Bohrungen 76 und 78 auf. Die Bohrungen erstrecken sich jeweils vom Umfang auf der Mantelseite des Gehäuses 16 bzw. Motorflansches 14 zu den zugehörigen Planseiten in Richtung auf die dem Gehäuse bzw. Motorflansch nächstliegende Schleifscheibe. Für jeden Anschleifwinkel, d.h. der Winkel, unter dem eine in eine Bohrung beziehungsweise einen Durchbruch eingeführte Elektrode auf die Schleifscheibe trifft, ist für jede Bohrung in einem Gehäuseteil unterschiedlich. Die Bohrung hat also beispielsweise einen Durchmesser von 5,7 mm und einen Anschleifwinkel von 22,5, 30 und 80 Grad. Der Anschleifwinkel ist durch eine Gravur 82 oberhalb der Bohrung angegeben.

In die Bohrung wird ein nachstehend beschriebener Führungseinsatz gesteckt. Der Führungseinsatz hat einen Außendurchmesser, welcher so an den Durchmesser der Bohrung angepasst ist, dass er zumindest teilweise in die Bohrung einführbar ist. Die Führungseinsätze haben unterschiedliche Innendurchmesser. Diese sind so ausgewählt, dass die zu bearbeitenden Elektroden gerade in den Führungseinsatz gesteckt werden können und dort gut geführt werden.

Beispielsweise sind verschiedene Winkel bei einem Anschliff möglich. Dabei können entsprechend der Anzahl der zur Verfügung stehenden Führungseinsätze Elektroden mit unterschiedlichen Durchmessern verwendet werden. Die Elektrode wird durch die Bohrung so gut geführt, dass reproduzierbare Ergebnisse ohne Aufwand oder Gefahr erhalten werden.

Mehr Anschleifwinkel, weitere Elektrodendurchmesser oder die Verwendung einer Schleiffläche mit unterschiedlicher Körnung werden berücksichtigt, indem der Motorflansch 14 ebensolche Bohrungen 78 aufweist und zwei Schleifscheiben verwendet werden. Eine Elektrode, kann zum Beispiel zunächst grob vorgeschliffen werden, indem sie durch eine Bohrung im Gehäuse 16 geführt wird. Dabei wird für die Schleifscheibe 20, deren Abriebfläche nach oben in der Darstellung zeigt, eine grobe Körnung vorgesehen. Zum Feinschliff wird dann eine Bohrung im Motorflansch 14 verwendet. Die zugehörige Schleifscheibe, deren Abriebfläche nach unten zeigt, weist eine feine Körnung auf. Sowohl die Bohrungen 76 im Gehäuseteil 16, als auch die Bohrungen 78 im Motorflansch wurden mit der gleichen Maschine mit identischen Einstellungen gefertigt. Die Bohrungen sind also mit geringen Abweichungen identisch. Die Abriebfläche liegt bei der vorliegenden Anordnung immer in der gleichen Ebene. Auf diese Weise wird ein besonders geringer Fehler beim Anschleifwinkel erreicht. Im vorliegenden Beispiel sind die Bohrungen 76 so gefertigt, dass der angegebene Anschleifwinkel erreicht wird, wenn die Abriebfläche in der Ebene 60 liegt und die Bohrungen 78, wenn die Abriebfläche in der eine Scheibendicke unterhalb der Ebene 26 liegenden Ebene liegt.

Das Gehäuse 16 weist weiterhin eine Bohrung auf, welche sich senkrecht von der Oberseite zur Unterseite des Gehäuses 16 erstreckt. Auch diese Bohrungen kann mit Führungseinsätzen unterschiedlicher Durchmesser verwendet werden. Die Bohrung ermöglicht das senkrechte Schleifen der Elektrodenspitzen.

Die gesamte Anordnung ist auf ein Handgerät aufgeschraubt. Dabei sitzt die Schleifscheibenanordnung unmittelbar vor dem Kugellager der Motorwelle 30. Dies verhindert ein Schlingern bei hohen Drehzahlen.

Zur Vermeidung des Eindringes von Staub, abgetragenem Material und Schleifmittel und dergleichen in den Motor oder das Lager ist eine Prallscheibe 84 vorgesehen. Die Prallscheibe 84 wird zwischen der motorseitigen Schleifscheibe 22 und dem Motorflansch mit einer Hülse auf das obere Ende 28 der Motorwelle 30 gestülpt und rotiert mit. Die motorseitige, untere Fläche der Prallscheibe 84 ist im Bereich des Bodens der Vertiefung in der Planseite 26. Um die Hülse 86 herum ist ein Filzring 88 angeordnet, der nicht mitrotiert. Der Filzring 88 vermeidet weiteres Eindringen von Staub, abgetragenem Material und Schleifmittel in den Motor und das Lager. Der Stift 34 erstreckt sich durch eine Bohrung in der Prallscheibe 84. Auf diese Weise wird nicht nur die Schleifscheibenanordnung 18, sondern auch die Prallscheibe 84 von der Welle 30 angetrieben.

Die vorliegende Anordnung wurde eines konkreten Ausführungsbeispiels mit einer Schleifscheibe erläutert. Es versteht sich, dass die Anordnung variiert werden kann. So ist es beispielsweise möglich zwei Schleifscheiben zu verwenden oder ein weiteres Gehäuseteil, ähnlich wie das Gehäuseteil 16, aufzusetzen und in dem dazwischenliegenden Hohlraum weitere Schleifscheiben vorzusehen. Auch sind unterschiedliche Gestaltungen der Bohrungen zur Führung der Elektroden denkbar.

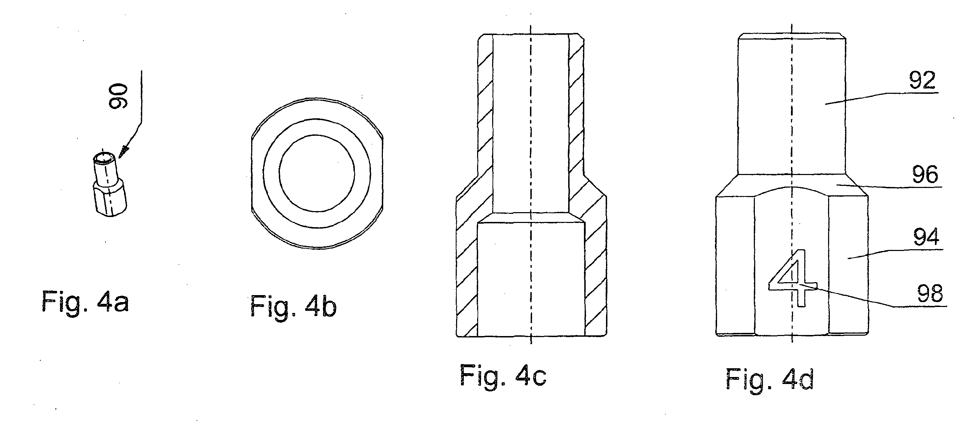

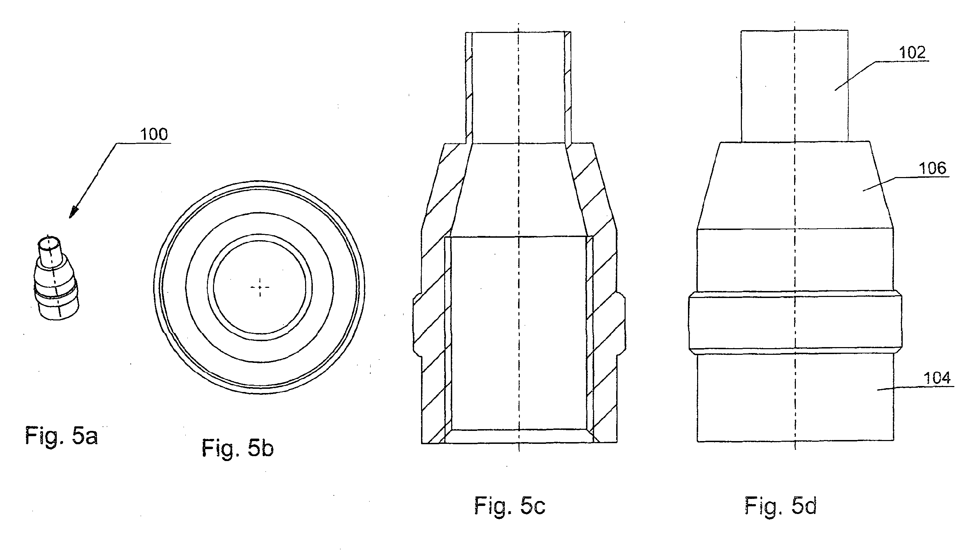

Figuren 4 und 5 zeigen zwei verschiedene Ausführungsbeispiele für einen Führungseinsatz. Ein in Figur 4 dargestellter Führungseinsatz 90 weist einen oberen Teil 92 mit kleinerem Außendurchmesser und einen unteren Teil 94 mit größerem Außendurchmesser auf. Dazwischen liegt ein Übergangsbereich 96. In der Schnittdarstellung in Figur 4c ist zu erkennen, dass der Innendurchmesser ebenfalls einen Bereich mit einem größeren und einem kleineren Innendurchmesser aufweist. Die Bereiche müssen nicht den Bereichen 92 und 94 entsprechen. Der Führungseinsatz wird mit dem Bereich 92 in die Bohrung mit dem gewünschten Anschleifwinkel eingeführt. Die Elektrode wird vom Ende 94 her in den Führungseinsatz 90 eingeführt und kann dann bequem bearbeitet werden. Jeder Führungseinsatz 90 ist mit einer Gravur 98 versehen, welche den Innendurchmesser oder den Durchmesser der Elektrode angibt.

Figur 5 zeigt einen anderen Führungseinsatz 100. Auch der Führungseinsatz 100 weist einen Bereich 102 mit geringerem Außendurchmesser und einen Bereich 104 mit größerem Außendurchmesser auf. Auch hier ist ein Übergangsbereich 106 vorgesehen. Der Führungseinsatz kann mit dem Bereich 104 eine rohrförmige Elektrodenhalterung aufnehmen und festklemmen. In der Elektrodenhalterung (nicht dargestellt) ist die passende Elektrode aufgenommen. Wenn die Elektrode geschliffen werden soll, wird die Halterung auf eine Bohrung 76 oder 78 gesteckt und die Elektrode durch den Bereich 102 zur Schleifscheibe geschoben.

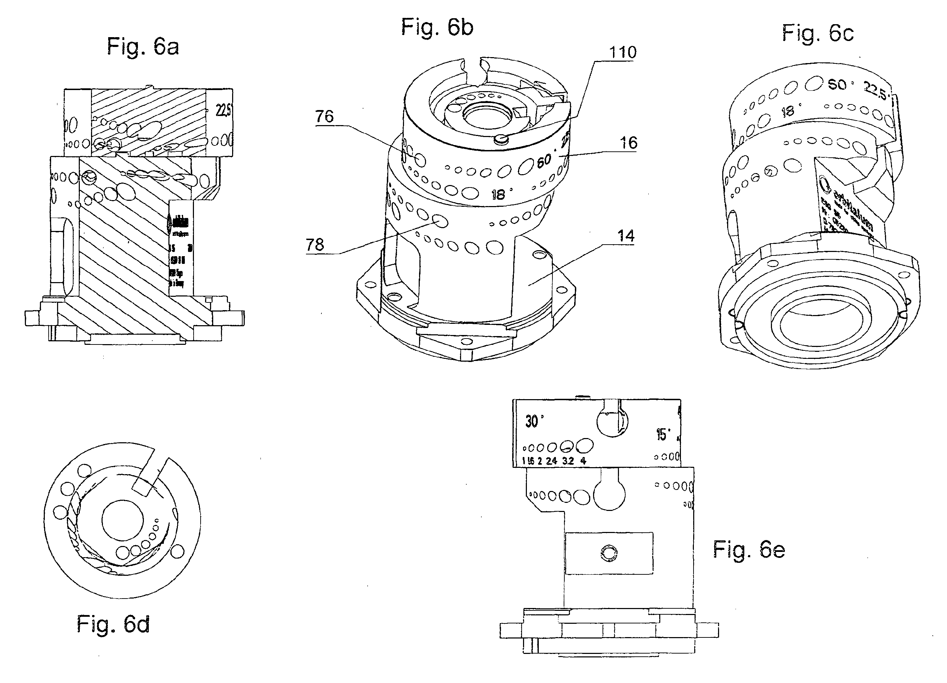

Zur besseren Ausnutzung der Schleifscheibe ist das Gehäuseteil 16 gegenüber dem Motorflansch 14 um eine außermittige Längsachse 110 verstellbar und in dieser Lage arretierbar. Dies ist in Figur 6 dargestellt. Die Bohrungen 76 und 78 münden dann in einem anderen Bereich auf der Schleifscheibe, weiter außen oder innen. Entsprechend werden so bisher ungenutzte Bereiche der Schleifscheibe genutzt. Es versteht sich, dass auch andere Anordnungen, etwa ohne Führungshülsen, oder mit mehreren Schleifscheiben eine derartige Rotation um eine außermittige Achse zur besseren Ausnutzung der Abriebfläche einsetzen können.

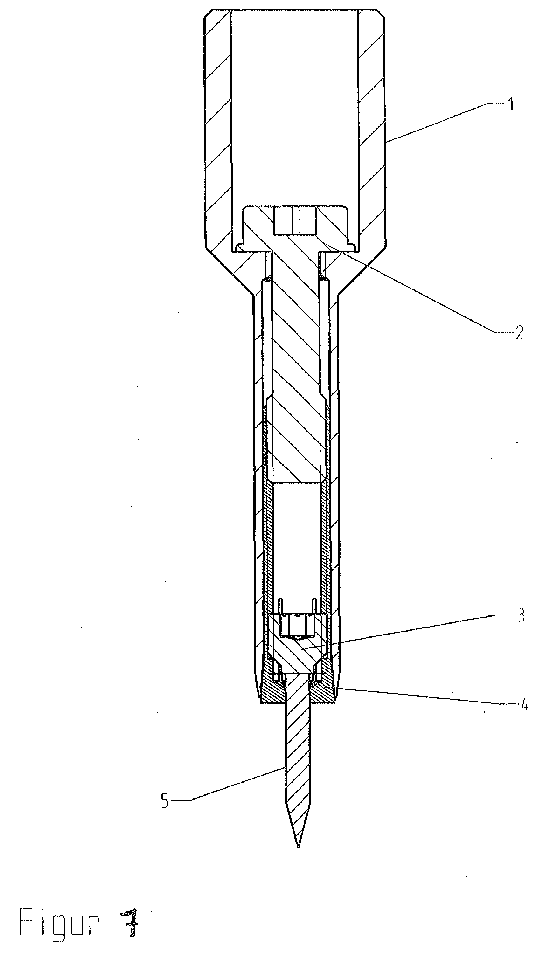

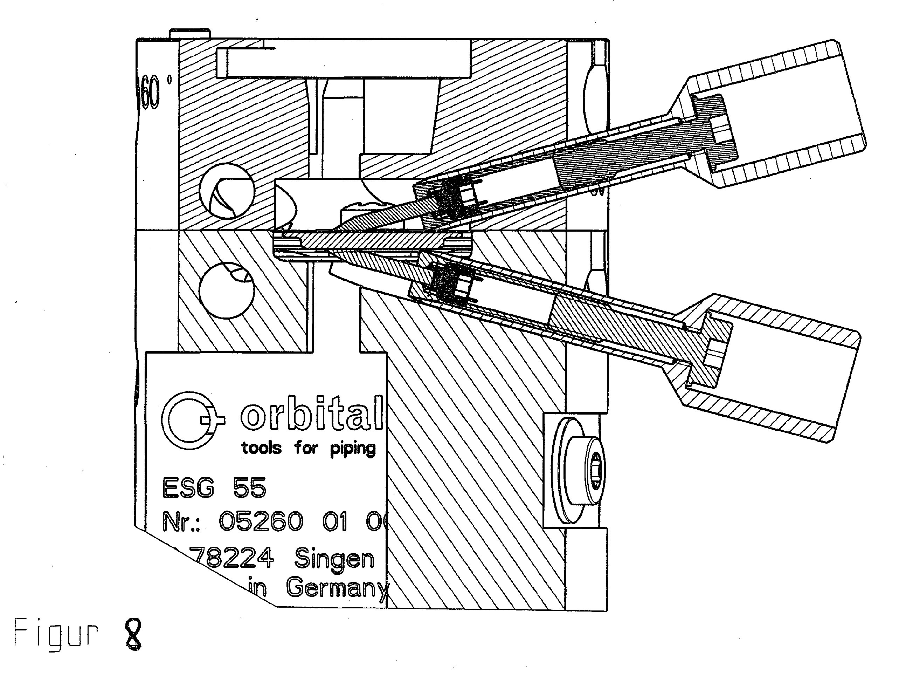

Figur 7 zeigt einen Führungseinsatz 1 für Kurzelektroden. Eine solche Kurzelektrode ist in der Darstellung mit 5 bezeichnet. Die Kurzelektrode 5 ist mit einem Gewindekopf 3 in einer Spannzange 4 gehalten. Die Spannzange 4 weist ein Innengewinde auf. In das Innengewinde der Spannzange 4 ist von hinten ein Gewindestift 2 eingeschraubt. Der Gewindestift 2 wird bis zu einer gewünschten, einstellbaren Tiefe eingeschraubt. Der Führungseinsatz 1 weist eine Schulter auf, welche als Anschlag für den Kopf des Gewindestifts 2 dient. Zum Schleifen wird einfach die Kurzelektrode mit der Spannzange 4 bis zum Anschlag von hinten in den Führungseinsatz 1 eingesteckt. Die gesamte Anordnung wird anschließend in die Bohrung mit dem gewünschten Schleifwinkel geschoben, wie dies in Figur 8 dargestellt ist. Durch den langgestreckten Führungseinsatz 1 reicht auch eine kurze Elektrode bis an die Schleifscheibe heran.

## Patentansprüche

1. Vorrichtung (10) zur Bearbeitung von Schweißelektroden mit einer von einem Antriebsmotor über eine Welle (30) angetriebenen Schleifscheibe (20; 22), welche in einem Hohlraum in einem Gehäuse (14, 16) umläuft, wobei in dem Gehäuse (14, 16) eine Vielzahl von Durchbrüchen (76, 78) zur Führung von zu bearbeitenden Schweißelektroden in definierter Lage zu der Schleifscheibe (20; 22) in einer Vielzahl von Anschleifwinkeln vorgesehen. sind, **dadurch gekennzeichnet dass**
(a) für jeden gewünschten Anschleifwinkel nur ein Durchbruch vorgesehen ist;
(b) alle Durchbrüche einen einheitlichen Innendurchmesser haben, und
(c) eine Vielzahl von Führungseinsätzen (1, 90, 100) vorgesehen ist, wobei für jeden Elektrodendurchmesser der zu bearbeitenden Schweißelektroden ein Führungseinsatz vorgesehen ist, welcher zumindest teilweise in den Durchbruch passgenau einführbar ist und dessen Innendurchmesser derart an den Elektrodendurchmesser angepasst ist, dass die Schweißelektrode in dem Führungseinsatz führbar ist.

2. Vorrichtung nach Anspruch 1, **dadurch gekennzeichnet, dass** der Führungseinsatz einen ersten Einsatzteil mit einem Außendurchmesser aufweist, der größer ist, als der Innendurchmesser der Durchbrüche und einen zweiten Einsatzteil mit einem Außendurchmesser, der passgenau in den Durchbruch einführbar ist.

3. Vorrichtung nach einem der vorgehenden Ansprüche, **dadurch gekennzeichnet, dass** der Führungseinsatz mit einem rohrförmigen Halter zur Aufnahme einer vollständigen Elektrode verbindbar ist.

4. Vorrichtung nach einem der vorgehenden Ansprüche, **dadurch gekennzeichnet, dass** der Führungseinsatz (1) langgestreckt ist und eine Halterung für Kurzelektroden (5) umfasst, welche im Inneren des Führungseinsatzes gehalten ist.

5. Vorrichtung nach Anspruch 4, **dadurch gekennzeichnet, dass** die Halterung für Kurzelektroden von einer Spannzange (4) gebildet ist.

6. Vorrichtung nach Anspruch 5, **dadurch gekennzeichnet, dass** die Spannzange (4) ein Innengewinde aufweist, in welches ein Gewindestift (2) mit einem Anschlag bis zu einer ausgewählten Tiefe einschraubbar ist, und der Führungseinsatz (1) eine Schulter aufweist, auf welcher der Anschlag aufliegt.

7. Vorrichtung nach Anspruch 4, **dadurch gekennzeichnet, dass** die Halterung der Kurzelektroden mittels einer Schrumpfpassung erfolgt, die mittels Wärme erzeugt wird.

## Claims

1. Device (10) for processing welding electrodes with a grinding wheel (20; 22) driven by a driving motor with a shaft (30), which runs in a cavity in a housing (14, 16), wherein a plurality of openings (76, 78) is provided in the housing (14, 16) for guiding welding electrodes for processing in a defined position relative to the grinding wheel (20, 22) in a plurality of grinding angles **characterized in that**
(a) only one opening is provided for each desired grinding angle;
(b) all openings have unified inner diameter, and
(c) a plurality of guiding inserts (1, 90, 100) is provided wherein a guiding insert is provided for each electrode diameter of the welding electrodes for processing which can be fitted into the opening and which has an inner diameter which is adapted to the diameter of the electrode in such a way that the welding electrod can be guided in the guiding insert.

2. Device according to claim 1, **characterized in that** the guiding insert has a first insert portion with an outer diameter which is larger than the inner diameter of the openings and a second insert portion with an outer diameter which can be fitted into the opening.

3. Device according to any of the preceding claims, **characterized in that** the guiding insert can be connected to a tube-shaped holder for receiving an entire electrode.

4. Device according to any of the preceding claims, **characterized in that** the guiding insert (1) is elongated and comprises a holder for short electrodes (5) which are held in the inner portion of the guiding insert.

5. Device according to claim 4, **characterized in that** the holder for the short electrodes is formed by tongs (4).

6. Device according to claim 5, **characterized in that** the tongs (4) are provided with an inner thread and a threaded pin (2) with a stop is adapted to be screwed therein up to a selected depth and the guiding insert (1) is provided with a shoulder abuting such stop.

7. Device according to claim 4, **characterized in that** the holding of the short electrodes is effected by means of a shrink fit which is generated by heat.

## Revendications

1. Dispositif (10) d'usinage d'électrodes de soudage à l'aide d'un disque d'affûtage (20 ; 22) entraîné par un moteur d'entraînement via un arbre (30) et qui est en rotation dans un espace creux situé dans un boîtier (14, 16), plusieurs percements (76, 78) étant prévus dans le boîtier (14, 16) afin de guider des électrodes de soudage à usiner dans une position définie par rapport au disque d'affûtage (20 ; 22) sous plusieurs angles d'affûtage, **caractérisé en ce que**
(a) un seul percement est prévu pour chaque angle d'affûtage souhaité ;
(b) tous les percements possèdent un diamètre intérieur uniforme, et
(c) il est prévu plusieurs embouts de guidage (1, 90, 100), un embout de guidage pouvant être introduit avec exactitude au moins en partie dans le percement et dont le diamètre intérieur est adapté au diamètre de l'électrode de sorte que l'électrode de soudage peut être guidée dans l'embout de guidage, étant prévu pour chaque diamètre des électrodes de soudage à usiner.

2. Dispositif selon la revendication 1, **caractérisé en ce que** l'embout de guidage présente un premier élément d'embout au diamètre extérieur supérieur au diamètre intérieur des percements et un second élément d'embout au diamètre extérieur pouvant être introduit avec exactitude dans le percement.

3. Dispositif selon l'une quelconque des revendications précédentes, **caractérisé en ce que** l'embout de guidage peut être relié à un support tubulaire destiné à loger une électrode entière.

4. Dispositif selon l'une quelconque des revendications précédentes, **caractérisé en ce que** l'embout de guidage (1) est de forme allongée et comprend une fixation pour électrodes courtes (5) maintenue à l'intérieur de l'embout de guidage.

5. Dispositif selon la revendication 4, **caractérisé en ce que** la fixation pour électrodes courtes est formée par une pince de serrage (4).

6. Dispositif selon la revendication 5, **caractérisé en ce que** la pince de serrage (4) présente un filet interne à l'intérieur duquel une vis sans tête (2) munie d'une butée peut être vissée jusqu'à une profondeur choisie, et l'embout de guidage (1) présente un épaulement sur lequel repose la butée.

7. Dispositif selon la revendication 4, **caractérisé en ce que** la fixation des électrodes courtes s'effectue par retrait à chaud.
